# FASCICULE DE BREVET EUROPEEN

(11) **EP 3 336 510 B1**
(45) Date de publication et mention de la délivrance du brevet: **15.05.2019**
(21) Numéro de dépôt: 17202943.1
(22) Date de dépôt: 22.11.2017
(51) Int. Cl.: G01M 13/02, G05B 23/02, G06Q 10/00, G07C 5/08, B64F 5/60, B64D 45/00

(54) **PROCEDE D' ANALYSE DES VARIATIONS D' AU MOINS UN INDICATEUR DU COMPORTEMENT D'UN MECANISME EQUIPANT UN AERONEF**
ANALYSEVERFAHREN DER VARIATIONEN MINDESTENS EINES VERHALTENSINDIKATORS EINES MECHANISMUS DER AUSSTATTUNG EINES LUFTFAHRZEUGS
A METHOD OF ANALYZING VARIATIONS OF AT LEAST ONE INDICATOR OF THE BEHAVIOR OF A MECHANISM FITTED TO AN AIRCRAFT

(30) Priorité: 14.12.2016 FR 1601771
(43) Date de publication de la demande: 20.06.2018
(73) Titulaire: Airbus Helicopters, 13725 Marignane Cedex (FR)
(72) Inventeur: DIAZ, Alexandre, 13250 SAINT-CHAMAS (FR); MITHALAL, Kishan, 84120 PERTUIS (FR); DOUSSE, Pierre, 13008 MARSEILLE (FR); BOUTALEB, Abdelhafid, 13127 VITROLLES (FR); SIMONET, Romaric, 13127 VITROLLES (FR); ROCHEFORT, Didier, 13013 MARSEILLE (FR)
(74) Mandataire: GPI & Associés

(56) Documents cités:
- EP-A1- 0 407 179
- FR-A1- 2 900 746
- US-A- 5 974 349
- US-A1- 2007 156 496

## Description

La présente invention concerne un procédé pour étudier le comportement des mécanismes d'un aéronef et éventuellement détecter une anomalie dans ce comportement pour permettre d'anticiper un risque de panne. De tels mécanismes sont le plus souvent mobiles en rotation. Ils comportent alors des arbres de transmission de puissance et des moyens de transmission de puissance tels que des engrenages pour transmettre un mouvement de rotation entre par exemple un (ou des) moteur(s) et un rotor permettant de réaliser au moins la sustentation, voire la propulsion, de l'aéronef.

Plus précisément, l'invention se rapporte à l'analyse des variations dans le temps d'indicateurs déterminés à partir de mesures vibratoires à proximité d'un ou de plusieurs mécanismes, ces mesures vibratoires étant effectuées en vol lors d'une mission de l'aéronef. De tels indicateurs sont alors obtenus à postériori en effectuant une analyse de ces mesures vibratoires dans le temps.

Pour pratiquer ces mesures, on équipe l'aéronef d'accéléromètres qui sont placés (fixés) sur le(s) moteur(s), sur le(s) carter(s) de boîte(s) de transmission de puissance, sur des paliers d'arbres, et/ou en d'autres points de la structure de l'aéronef. Pendant un vol, les signaux délivrés par ces capteurs sont convertis en données et le cas échéant synchronisés (grâce à des signaux délivrés par un capteur de rotation, par exemple) et/ou moyennés, puis enregistrés à bord de l'aéronef. De retour au sol, les données enregistrées sont transmises à une station dite « station de communication » permettant notamment de lire les données enregistrées, de les analyser voire de les transmettre par exemple au fabricant de l'aéronef.

De façon générale et tel que décrit dans le document FR 2 900 746, l'interprétation de ces données est complexe et peut nécessiter une intervention longue d'un expert.

Les outils connus d'analyse automatique de ces données aux fins de diagnostiquer un défaut mécanique dans le mécanisme de transmission sont incomplets et imparfaits. En effet, l'exploitant de l'aéronef peut être alerté tardivement, voire inutilement, d'un problème sur l'un des mécanismes d'un aéronef.

De plus, ce type de procédé d'analyse repose sur le principe de dépassement d'un seuil limite à partir duquel une alarme est déclenchée empêchant alors l'aéronef de voler tant qu'une opération de maintenance curative n'est pas réalisée pour vérifier et/ou corriger le problème détecté.

Tel que décrit dans le document EP 0 407 179, il est également connu un procédé de transmission au sol de données mesurées en vol par des capteurs équipant un aéronef. Les données sont alors analysées et une alerte peut être générée si les valeurs mesurées dépassent un seuil prédéterminé.

Ainsi, comme pour le document FR 2 900 746, lorsqu'une alerte est déclenchée, celle-ci empêche alors l'aéronef de voler tant qu'une opération de maintenance curative n'est pas réalisée pour vérifier et/ou corriger le problème détecté correspondant au dépassement du seuil prédéterminé.

Par ailleurs, le document US 2007 / 156 496 A1 quant à lui un procédé de gestion de la maintenance d'une flotte d'aéronefs, et plus particulièrement d'avions. Ce document décrit ainsi un procédé dans lequel des données issues de plusieurs aéronefs du même type et appartenant à aux moins deux exploitants sont transmises au fabricant de la flotte d'aéronefs.

Cependant dans ce cas, les données ne sont pas analysés pour identifier un problème potentiel dans le comportement d'un mécanisme équipant l'un au moins des avions de la flotte. Par suite, aucune étape d'alerte n'est mise en oeuvre par ce procédé pour alerter différents exploitants d'une flotte d'avions d'un problème potentiel sur l'un de leurs équipements.

En outre, le document US 5 974 349 décrit un autre procédé de gestion de la maintenance curative d'un aéronef. Il permet notamment d'alerter un exploitant de l'aéronef qu'une opération de maintenance n'a pas été réalisée conformément au temps de vol effectuée par une pièce critique de l'aéronef. Comme précédemment, ce procédé permet alors de réaliser une étape d'alerte uniquement si un seuil de temps de vol limite est dépassé par la pièce considérée.

La présente invention a alors pour objet de proposer un procédé permettant de s'affranchir des limitations mentionnées ci-dessus. Le but de l'invention est de fournir un procédé d'analyse de telles données qui permet d'établir par le fabriquant de l'aéronef un diagnostic fiable sur le comportement d'un mécanisme de fonctionnement de l'aéronef. Le fabriquant de l'aéronef peut alors contacter l'exploitant de l'aéronef préalablement au dépassement d'un seuil qui serait normalement détecté par la station de communication installée chez l'exploitant permettant de réaliser une analyse automatique de ces données.

L'exploitant de l'aéronef peut alors anticiper un signal d'alarme qui serait causé par le dépassement d'un seuil et utiliser par exemple une période de non utilisation de l'aéronef pour effectuer des opérations de maintenance préventive sur l'aéronef. De cette manière, les périodes de non utilisation de l'aéronef peuvent être utilisées pour effectuer en temps masqué des opérations de vérification et/ou de remplacement des mécanismes incriminés. Ces opérations de maintenance seront donc sans conséquence pour l'exploitation commerciale de l'aéronef par l'exploitant.

L'invention se rapporte donc à un procédé d'analyse des variations d'au moins un indicateur du comportement d'un mécanisme équipant un aéronef, le (ou les) indicateur(s) étant déterminé(s) à partir de mesures d'au moins un paramètre physique de fonctionnement du mécanisme lors d'une mission de l'aéronef, ce procédé comportant au moins :
- une étape d'enregistrement des mesures du (ou des) paramètre(s) physique(s) de fonctionnement dans une unité de stockage ;
- une première étape de transmission des mesures du (ou des) paramètre(s) physique(s) de fonctionnement contenues dans l'unité de stockage vers une station de communication externe à l'aéronef, la station de communication étant installée chez un exploitant de l'aéronef ;
- une seconde étape de transmission des mesures du (ou des) paramètre(s) physique(s) de fonctionnement depuis la station de communication vers un centre d'analyse externe à l'aéronef, le centre d'analyse étant commun à une flotte d'aéronefs d'un même type et étant installé chez un fabriquant de la flotte d'aéronefs ;
- une étape de génération du (ou des) indicateur(s) réalisée à partir des mesures du (ou des) paramètre(s) physique(s) de fonctionnement ;
- une étape d'analyse des variations du (ou des) indicateur(s).

Un tel procédé est remarquable en ce que l'étape d'analyse des variations du (ou des) indicateur(s) est effectuée à partir des mesures du (ou des) paramètre(s) physique(s) de fonctionnement d'au moins deux mécanismes distincts équipant au moins deux aéronefs du même type appartenant à au moins deux exploitants distincts, le centre d'analyse permettant d'analyser les variations du (ou des) indicateur(s) en provenance d'un premier aéronef appartenant à un premier exploitant et les variations du (ou des) indicateur(s) en provenance d'un second aéronef appartenant à un second exploitant, les premier et second aéronefs étant deux aéronefs du même type appartement à la flotte d'aéronefs du même type, et en ce que le procédé comporte une étape de détection d'un problème potentiel dans le comportement du mécanisme équipant l'un au moins des aéronefs de la flotte et une étape d'alerte permettant d'alerter le fabriquant de la flotte d'aéronefs d'un problème potentiel dans le comportement du mécanisme équipant l'un au moins des aéronefs de la flotte.

Autrement dit, un centre d'analyse est commun à l'ensemble de la flotte d'aéronefs du même type utilisés par différents exploitants. Le centre d'analyse permet alors d'analyser simultanément et/ou successivement le (ou les) indicateur(s) en provenance du premier exploitant et du second exploitant par le fabriquant de cette flotte d'aéronefs.

Les exploitants peuvent alors être contactés par le fabriquant de la flotte d'aéronefs lorsque l'étape d'alerte est mise en oeuvre par le procédé conforme à l'invention. Une telle étape d'alerte est alors mise en oeuvre préliminairement au dépassement par le (ou les) indicateur (s) d'un seuil prédéterminé ayant pour conséquence le déclenchement d'un signal d'alarme chez l'exploitant.

Avantageusement, l'étape d'analyse des variations du (ou des) indicateur(s) peut comporter une sous étape d'analyse de forme consistant à comparer la forme d'une courbe représentative des variations du (ou des) indicateur(s) avec au moins une forme d'une courbe préenregistrée dans une base de donnée, la courbe préenregistrée correspondant à un problème potentiel dans le comportement du mécanisme.

En d'autres termes, la sous étape d'analyse de forme permet d'identifier une similitude partielle ou totale entre la courbe représentative des variations du (ou des) indicateur(s) et la courbe préenregistrée dans la base de données. Une telle base de données permet ainsi de répertorier et de stocker une pluralité de courbes correspondant à un problème potentiel identifié dans le comportent d'un mécanisme. Une telle base de donnée est par conséquent évolutive et peut être implémentée par le fabriquant à chaque identification d'un problème potentiel.

En pratique, la sous étape d'analyse de forme peut comporter une étape de découpage consistant à découper les variations du (ou des) indicateur(s) en une pluralité d'échantillons de même dimension temporelle correspondant à une dimension temporelle de référence représentative de l'abscisse de la courbe préenregistrée.

Ainsi, la sous étape d'analyse de forme peut débuter par une étape de découpage permettant de prendre comme référence la dimension temporelle des valeurs en abscisse de la courbe préenregistrée au moyen d'un repère temporel lors de l'acquisition des variations du (ou des) indicateur(s). Une telle étape permet alors de générer une pluralité de groupes d'acquisitions de même dimension temporelle correspondant à la dimension temporelle de référence.

Selon une caractéristique avantageuse de l'invention, la sous étape d'analyse de forme peut comporter une étape de comparaison consistant à comparer selon une méthode dite des "moindres carrés" chacun des échantillons avec la courbe préenregistrée.

De cette manière, l'étape de comparaison permet d'analyser de manière fiable et reproductive un écart entre la courbe préenregistrée et le nuage de points relevés lors de l'acquisition des variations du (ou des) indicateur(s).

Avantageusement encore, l'étape de comparaison peut permettre de déterminer un poids de compatibilité en pourcentage de chaque échantillon par rapport à la courbe préenregistrée.

Dans ce cas, le poids de compatibilité correspond au coefficient de corrélation linéaire ou encore à une moyenne des mesures de la dispersion du nuage de points par rapport à la courbe préenregistrée.

Selon un exemple de réalisation avantageux, l'étape de détection d'un problème potentiel dans le comportement du mécanisme équipant l'un au moins des aéronefs de la flotte peut consister à détecter un dépassement d'une valeur de seuil prédéfinie par le poids de compatibilité.

Par suite, lorsque le poids de compatibilité est faible aucune étape d'alerte n'est mise en oeuvre par le procédé conforme à l'invention. Cependant, lorsque le poids de compatibilité atteint la valeur de seuil prédéfinie, qui peut être selon un exemple de réalisation particulier égale à 80%, une étape d'alerte est alors mise en oeuvre par un tel procédé

En pratique, l'étape d'analyse des variations du (ou des) indicateur(s) peut comporter une sous étape d'analyse de discontinuité consistant à identifier une discontinuité dans une pente d'une tangente à une courbe représentative des variations du (ou des) indicateur(s).

Dans ce cas, le procédé d'analyse permet d'identifier un changement de pente important pour la tangente à la courbe représentative des variations du (ou des) indicateur(s) qui peut être par exemple un point d'inflexion. Une telle sous étape est par ailleurs apte à filtrer un éventuel bruitage dans le nuage de points correspondant à l'acquisition des variations du (ou des) indicateur(s). En outre, les différentes courbes représentatives des variations du (ou des) indicateur(s) sont réalisées en effectuant une régression linéaire à partir d'un nuage de points correspondant aux différentes mesures. Chaque régression linéaire peut alors être définie par un coefficient de corrélation représentatif de la pente de la tangente à la courbe.

Le procédé d'analyse permet alors d'identifier des ruptures de pente au niveau des tangentes aux différentes courbes représentatives des variations du (ou des) indicateur(s) présentant un coefficient de corrélation de même signe, les tangentes étant alors formées uniquement soit par des fonctions affines croissantes, soit par des fonctions affines décroissantes.

Un tel procédé d'analyse permet d'identifier, en fonction des capacités d'analyse chez le fabriquant et de l'expérience correspondant aux problèmes identifiés dans le comportement du mécanisme par le fabriquant, une variation rapide du coefficient directeur de la tangente à une courbe représentative des variations du (ou des) indicateur(s).

L'invention et ses avantages apparaîtront avec plus de détails dans le cadre de la description qui suit avec des exemples donnés à titre illustratif en référence aux figures annexées qui représentent :
- la figure 1, un schéma illustrant une flotte d'aéronefs permettant de mettre en oeuvre le procédé d'analyse conforme à l'invention,
- la figure 2, une vue perspective illustrant deux stations exploitants connectées à un centre d'analyse permettant la mise en oeuvre du procédé conforme à l'invention,
- la figure 3, un schéma de principe illustrant une première variante d'un procédé d'analyse conforme à l'invention,
- la figure 4, une vue de détail illustrant l'étape d'analyse des variations du ou des indicateur(s) conforme à la première variante du procédé d'analyse selon la figure 3, et
- la figure 5 un schéma de principe illustrant une deuxième variante d'un procédé d'analyse conforme à l'invention.

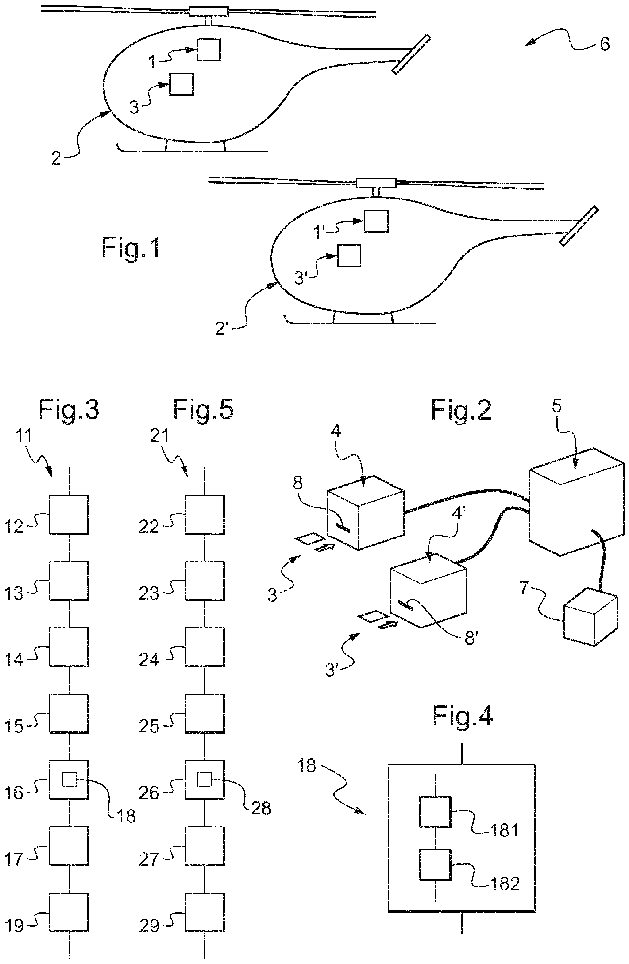

Comme déjà évoqué et tel que représenté à la figure 1, l'invention se rapporte à un procédé d'analyse des variations d'au moins un indicateur du comportement d'un mécanisme 1, 1' équipant un aéronef 2, 2' d'une flotte 6 d'aéronefs 2, 2' d'un même type appartenant à au moins deux exploitants distincts. Par ailleurs, le (ou les) indicateur(s) est(sont) déterminé(s) à partir de mesures d'au moins un paramètre physique de fonctionnement du mécanisme 1, 1' lors d'une mission de l'aéronef 2, 2'.

De telles mesures d'au moins un paramètre physique de fonctionnement du mécanisme 1, 1' sont alors obtenues au moyen de capteurs sensibles à ce au moins un paramètre physique de fonctionnement. De tels capteurs peuvent ainsi par exemple comprendre des accéléromètres unidirectionnels ou multidirectionnels. Les mesures du (ou des) paramètre(s) physique(s) de fonctionnement du mécanisme 1, 1' sont ensuite enregistrées dans une unité de stockage 3, 3' lors de chaque mission de l'aéronef 2, 2'.

A la suite de la fin de mission de l'aéronef 2, 2', et tel que représenté à la figure 2, un tel procédé met en oeuvre le transfert des mesures du ou des paramètre(s) physique(s) de fonctionnement du mécanisme 1, 1' contenues dans l'unité de stockage 3, 3' vers une station de communication 4, 4' qui est installée chez au moins deux exploitants distincts.

Une telle unité de stockage 3, 3' peut se présenter par exemple sous la forme d'une carte mémoire ou encore d'un disque dur externe amovible. Un opérateur peut alors déconnecter l'unité de stockage 3, 3' de l'aéronef 2, 2' lorsque celui-ci est au sol pour venir ensuite l'insérer dans un port de lecture 8, 8' compatible ménagé au niveau de la station de communication 4, 4'. Le port de lecture 8, 8' permet ainsi de lire et de transférer les données contenues dans l'unité de stockage 3, 3' vers la station de communication 4, 4'.

Par ailleurs, les différentes stations de communication 4 et 4' installées chez les différents exploitants d'aéronefs 2 et 2' sont alors reliées à un centre d'analyse 5 qui est quant à lui installé chez le fabricant de la flotte d'aéronefs 2, 2'. Cette liaison utilise préférentiellement une connexion internet sécurisée et permet ainsi au centre d'analyse 5 d'analyser les paramètre(s) physique(s) de fonctionnement du mécanisme 1, 1' en provenance de deux exploitants d'aéronefs 2, 2' physiquement très éloignés du centre d'analyse 5.

Par ailleurs, des indicateurs sont ensuite générés par la station de communication 4, 4' et/ou par le centre d'analyse 5 au moyen des mesures effectuées par les capteurs sensibles au(x) paramètre(s) physique(s) de fonctionnement du mécanisme 1, 1'.

De tels indicateurs sont alors analysés conformément au procédés d'analyse décrits aux figures 3 à 5 compotant une étape d'analyse 16, 26 des variations du (ou des) indicateur(s).

Selon une première variante de l'invention correspondant au procédé d'analyse 11, de telles variations peuvent avantageusement être comparées avec des courbes préenregistrées dans une base de données 7 contenant différentes courbes représentatives d'un problème potentiel dans le fonctionnement du mécanisme 1, 1' et préalablement identifié par le fabricant de la flotte 6 d'aéronefs 2, 2'.

Ainsi tel que représenté à la figure 3 selon la première variante de l'invention, le procédé 11 permet d'analyser des variations d'au moins un indicateur du comportement d'un mécanisme 1, 1' équipant un aéronef 2, 2'. En outre, un tel procédé 11 comporte au moins :
- une étape d'enregistrement 12 des mesures du (ou des) paramètre(s) physique(s) de fonctionnement dans une unité de stockage 3, 3' ;
- une première étape de transmission 13 des mesures du (ou des) paramètre(s) physique(s) de fonctionnement contenues dans l'unité de stockage 3, 3' vers la station de communication 4, 4' externe au aéronef 2, 2' ;
- une seconde étape de transmission 14 des mesures du (ou des) paramètre(s) physique(s) de fonctionnement depuis la station de communication 4, 4' vers le centre d'analyse 5 externe à l'aéronef 2, 2' ;
- une étape de génération 15 du (ou des) indicateur(s) réalisée à partir des mesures du (ou des) paramètre(s) physique(s) de fonctionnement ;
- une étape d'analyse 16 des variations du (ou des) indicateur(s) ;
- une étape de détection 17 d'un problème potentiel dans le comportement du mécanisme 1, 1' équipant l'un au moins des aéronefs 2, 2' de la flotte 6, et ;
- une étape d'alerte 19 permettant d'alerter le fabriquant de la flotte 6 d'aéronefs 2, 2' d'un problème potentiel dans le comportement du mécanisme 1, 1' équipant l'un au moins des aéronefs 2, 2'.

Par ailleurs, une telle étape d'analyse 16 des variations du (ou des) indicateur(s) est effectuée à partir desdites mesures du (ou des) paramètre(s) physique(s) de fonctionnement d'au moins deux mécanismes 1 et 1' distincts l'un de l'autre et équipant au moins deux aéronefs 2 et 2' du même type appartenant à au moins deux exploitants distincts. Dans ce cas, le centre d'analyse 5 est alors configuré pour analyser les variations du (ou des) indicateur(s) en provenance d'un premier aéronef 2 appartenant à un premier exploitant et les variations du (ou des) indicateur(s) en provenance d'un second aéronef 2' appartenant à un second exploitant.

Comme déjà évoqué, les premier et second aéronefs 2 et 2' sont alors deux aéronefs du même type appartement à la flotte 6 d'aéronefs 2, 2' du même type. L'analyse des différents variations du (ou des) indicateur(s) en provenance des premier et second aéronefs 2 et 2' peut alors, en fonction des capacités de calcul du centre d'analyse 5, s'effectuer de manière simultanée ou successivement.

Par ailleurs, selon cette première variante de l'invention telle que représentée à la figure 3, l'étape d'analyse 16 des variations du (ou des) indicateur(s) comporte une sous étape d'analyse de forme 18 consistant à comparer la forme d'une courbe représentative des variations du (ou des) indicateur(s) avec au moins une forme d'une courbe préenregistrée dans la base de donnée 7.

Telle que représentée en figure 4, cette sous étape d'analyse de forme 18 peut quant à elle comporter une étape de découpage 181 consistant à découper les variations du (ou des) indicateur(s) en une pluralité d'échantillons de même dimension temporelle correspondant à une dimension temporelle de référence représentative de la courbe préenregistrée dans la base de donnée 7.

En outre, la sous étape d'analyse de forme 18 peut également comporter une étape de comparaison 182 consistant à comparer selon une méthode dite des "moindres carrés" chacun des échantillons avec la courbe préenregistrée dans la base de données 7.

Selon une deuxième variante du procédé d'analyse 21 conforme à l'invention et telle que représentée à la figure 5, le procédé 21 comporte au moins :
- une étape d'enregistrement 22 des mesures du (ou des) paramètre(s) physique(s) de fonctionnement dans une unité de stockage 3, 3' ;
- une première étape de transmission 23 des mesures du (ou des) paramètre(s) physique(s) de fonctionnement contenues dans l'unité de stockage 3, 3' vers la station de communication 4, 4' externe au aéronef 2, 2' ;
- une seconde étape de transmission 24 des mesures du (ou des) paramètre(s) physique(s) de fonctionnement depuis la station de communication 4, 4' vers le centre d'analyse 5 externe à l'aéronef 2, 2' ;
- une étape de génération 25 du (ou des) indicateur(s) réalisée à partir des mesures du (ou des) paramètre(s) physique(s) de fonctionnement ;
- une étape d'analyse 26 des variations du (ou des) indicateur(s) ;
- une étape de détection 27 d'un problème potentiel dans le comportement du mécanisme 1, 1' équipant l'un au moins des aéronefs 2, 2' de la flotte 6, et ;
- une étape d'alerte 29 permettant d'alerter le fabriquant de la flotte 6 d'aéronefs 2, 2' d'un problème potentiel dans le comportement du mécanisme 1, 1' équipant l'un au moins des aéronefs 2, 2'.

Selon cette deuxième variante de l'invention, l'étape d'analyse 26 des variations du (ou des) indicateur(s) comporte une sous étape d'analyse de discontinuité 28 consistant à identifier une discontinuité dans une pente d'une tangente à une courbe représentative des variations du (ou des) indicateur(s).

Comme déjà évoqué, lors de cette sous étape d'analyse de discontinuité 28, les différentes courbes représentatives des variations du (ou des) indicateur(s) sont réalisées en effectuant une régression linéaire à partir d'un nuage de points correspondant aux différentes mesures. Chaque régression linéaire peut alors être définie par un coefficient de corrélation représentatif de la pente de la tangente à la courbe.

Un tel procédé d'analyse 21 permet alors d'identifier des ruptures de pente brusques pour les tangentes aux différentes courbes représentatives des variations du (ou des) indicateur(s) présentant un coefficient de corrélation de même signe, les tangentes étant alors formées uniquement soit par des fonctions affines croissantes, soit par des fonctions affines décroissantes.

En outre, une telle sous étape d'analyse de discontinuité 28 permet d'identifier une variation brusque du coefficient directeur de la tangente à une courbe représentative des variations du (ou des) indicateur(s).

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention définie par les revendications 1 à 7.

## Revendications

1. Procédé (11, 21) d'analyse des variations d'au moins un indicateur du comportement d'un mécanisme (1, 1') équipant un aéronef (2, 2'), ledit au moins un indicateur étant déterminé à partir de mesures d'au moins un paramètre physique de fonctionnement dudit mécanisme (1, 1') lors d'une mission dudit aéronef (2, 2'), ledit procédé (11, 21) comportant au moins :
• une étape d'enregistrement (12, 22) desdites mesures dudit au moins un paramètre physique de fonctionnement dans une unité de stockage (3, 3') ;
• une première étape de transmission (13, 23) desdites mesures dudit au moins un paramètre physique de fonctionnement contenues dans ladite unité de stockage (3, 3') vers une station de communication (4, 4') externe audit aéronef (2, 2'), ladite station de communication (4, 4') étant installée chez un exploitant dudit aéronef (2, 2') ;
• une seconde étape de transmission (14, 24) desdites mesures dudit au moins un paramètre physique de fonctionnement depuis ladite station de communication (4, 4') vers un centre d'analyse (5) externe audit aéronef (2, 2'), ledit centre d'analyse (5) étant commun à une flotte (6) d'aéronefs (2, 2') d'un même type et étant installé chez un fabriquant de ladite flotte (6) d'aéronefs (2, 2') ;
• une étape de génération (15, 25) dudit au moins un indicateur réalisée à partir desdites mesures dudit au moins un paramètre physique de fonctionnement ;
• une étape d'analyse (16, 26) des variations dudit au moins un indicateur ;
**caractérisé en ce que** ladite étape d'analyse (16, 26) desdites variations dudit au moins un indicateur est effectuée à partir desdites mesures dudit au moins un paramètre physique de fonctionnement d'au moins deux mécanismes (1) et (1') distincts équipant au moins deux aéronefs (2) et (2') du même type appartenant à au moins deux exploitants distincts, ledit centre d'analyse (5) permettant d'analyser lesdites variations dudit au moins un indicateur en provenance d'un premier aéronef (2) appartenant à un premier exploitant et lesdites variations dudit au moins un indicateur en provenance d'un second aéronef (2') appartenant à un second exploitant, lesdits premier et second aéronefs (2) et (2') étant deux aéronefs du même type appartenant à ladite flotte (6) d'aéronefs (2, 2') dudit même type, et **en ce que** ledit procédé comporte une étape de détection (17, 27) d'un problème potentiel dans le comportement dudit mécanisme (1, 1') équipant l'un au moins desdits aéronefs (2, 2') de ladite flotte (6) et une étape d'alerte (19, 29) permettant d'alerter ledit fabriquant de ladite flotte (6) d'aéronefs (2, 2') d'un problème potentiel dans le comportement dudit mécanisme (1, 1') équipant l'un au moins desdits aéronefs (2, 2') de ladite flotte (6).

2. Procédé selon la revendication 1,
**caractérisé en ce que** ladite étape d'analyse (16) desdites variations dudit au moins un indicateur comporte une sous étape d'analyse de forme (18) consistant à comparer la forme d'une courbe représentative desdites variations dudit au moins un indicateur avec au moins une forme d'une courbe préenregistrée dans une base de donnée (7), ladite courbe préenregistrée correspondant à un problème potentiel dans le comportement dudit mécanisme (1, 1').

3. Procédé selon la revendication 2,
**caractérisé en ce que** ladite sous étape d'analyse de forme (18) comporte une étape de découpage (181) consistant à découper lesdites variations dudit au moins un indicateur en une pluralité d'échantillons de même dimension temporelle correspondant à une dimension temporelle de référence représentative de l'abscisse de ladite courbe préenregistrée.

4. Procédé selon la revendication 3,
**caractérisé en ce que** ladite sous étape d'analyse de forme (18) comporte une étape de comparaison (182) consistant à comparer selon une méthode dite des "moindres carrés" chacun desdits échantillons avec ladite courbe préenregistrée.

5. Procédé selon la revendication 4,
**caractérisé en ce que** ladite étape de comparaison (182) permet de déterminer un poids de compatibilité en pourcentage de chaque échantillon par rapport à ladite courbe préenregistrée.

6. Procédé selon la revendication 5,
**caractérisé en ce que** ladite étape de détection (17) d'un problème potentiel dans le comportement dudit mécanisme (1, 1') équipant l'un au moins desdits aéronefs (2, 2') de ladite flotte (6) consiste à détecter un dépassement d'une valeur de seuil prédéfinie par ledit poids de compatibilité.

7. Procédé selon l'une quelconque des revendications 1 à 6,
**caractérisé en ce que** ladite étape d'analyse (26) desdites variations dudit au moins un indicateur comporte une sous étape d'analyse de discontinuité (28) consistant à identifier une discontinuité dans une pente d'une tangente à une courbe représentative desdites variations dudit au moins un indicateur.

## Patentansprüche

1. Verfahren (11, 21) zum Analysieren der Variationen mindestens eines Indikators für das Verhalten eines Mechanismus (1, 1') der Ausstattung eines Luftfahrzeugs (2, 2'), wobei der mindestens eine Indikator aus Messungen mindestens eines physikalischen Betriebsparameters des Mechanismus (1, 1') während einer Mission des Luftfahrzeugs (2, 2') bestimmt wird, wobei das Verfahren (11, 21) mindestens umfasst:
• einen Schritt des Aufzeichnens (12, 22) der Messungen des mindestens einen physikalischen Betriebsparameters in einer Speichereinheit (3, 3');
• einen ersten Schritt des Übertragens (13, 23) der in der Speichereinheit (3, 3') enthaltenen Messungen des mindestens einen physikalischen Betriebsparameters an eine Kommunikationsstation (4, 4') außerhalb des Luftfahrzeugs (2, 2'), wobei die Kommunikationsstation (4, 4') bei einem Betreiber des Luftfahrzeugs (2, 2') installiert ist;
• einen zweiten Schritt des Übertragens (14, 24) der Messungen des mindestens einen physikalischen Betriebsparameters von der Kommunikationsstation (4, 4') zu einem Analysezentrum (5) außerhalb des Luftfahrzeugs (2, 2'), wobei das Analysezentrum (5) einer Flotte (6) von Luftfahrzeugen (2, 2') des gleichen Typs gemeinsam ist und bei einem Hersteller der Flotte (6) von Luftfahrzeugen (2, 2') installiert ist;
• einen Schritt des Erzeugens (15, 25) des mindestens einen Indikators, der auf der Grundlage der Messungen des mindestens einen physikalischen Betriebsparameters vorgenommen wird;
• einen Schritt des Analysierens (16, 26) der Variationen des mindestens einen Indikators;
**dadurch gekennzeichnet, dass** der Schritt des Analysierens (16, 26) der Variationen des mindestens einen Indikators auf der Grundlage der Messungen des mindestens einen physikalischen Betriebsparameters an mindestens zwei verschiedenen Mechanismen (1) und (1') durchgeführt wird, mit denen mindestens zwei Luftfahrzeuge (2) und (2') des gleichen Typs ausgestattet sind, die mindestens zwei verschiedenen Betreibern gehören, wobei das Analysezentrum (5) es erlaubt, die Variationen des mindestens einen Indikators, die von einem einem ersten Betreiber gehörenden ersten Luftfahrzeug (2) herrühren, und die Variationen des mindestens einen Indikators, die von einem einem zweiten Betreiber gehörenden zweiten Luftfahrzeug (2') herrühren, zu analysieren, wobei das erste und das zweite Luftfahrzeug (2) und (2') zwei Luftfahrzeuge des gleichen Typs aus der Flotte (6) von Luftfahrzeugen (2, 2') des gleichen Typs sind,
und dass das Verfahren einen Schritt des Erfassens (17, 27) eines potenziellen Problems im Verhalten des Mechanismus (1, 1') der Ausstattung von mindestens einem der Luftfahrzeuge (2, 2') der Flotte (6) und einen Warnschritt (19, 29) umfasst, um den Hersteller der Flotte (6) von Luftfahrzeugen (2, 2') über ein potenzielles Problem im Verhalten des Mechanismus (1, 1') der Ausstattung des mindestens einen der Luftfahrzeuge (2, 2') der Flotte (6) zu informieren.

2. Verfahren nach Anspruch 1,
**dadurch gekennzeichnet, dass** der Schritt des Analysierens (16) der Variationen des mindestens einen Indikators einen Teilschritt der Formanalyse (18) umfasst, der darin besteht, die Form einer für die Variationen des mindestens einen Indikators repräsentativen Kurve mit mindestens einer Form einer zuvor aufgezeichneten Kurve in einer Datenbank (7) zu vergleichen, wobei die zuvor aufgezeichnete Kurve einem potenziellen Problem im Verhalten des Mechanismus (1,1') entspricht.

3. Verfahren nach Anspruch 2,
**dadurch gekennzeichnet, dass** der Teilschritt (18) der Formanalyse einen Zerlegeschritt (181) umfasst, der darin besteht, die Variationen des mindestens einen Indikators in eine Mehrzahl von Proben der gleichen zeitlichen Ausdehnung zu zerlegen, die einer für die Abszisse der Abszisse der zuvor aufgezeichneten Kurve repräsentativen Referenzzeitausdehnung entspricht.

4. Verfahren nach Anspruch 3,
**dadurch gekennzeichnet, dass** der Teilschritt (18) der Formanalyse einen Vergleichsschritt (182) umfasst, der darin besteht, nach einem sogenannten "kleinste-Quadrate"-Verfahren jede der Proben mit der zuvor aufgezeichneten Kurve zu vergleichen.

5. Verfahren nach Anspruch 4,
**dadurch gekennzeichnet, dass** der Vergleichsschritt (182) es ermöglicht, ein prozentuales Kompabilitätsgewicht jeder Probe in Bezug auf die zuvor aufgezeichnete Kurve zu bestimmen.

6. Verfahren nach Anspruch 5,
**dadurch gekennzeichnet, dass** der Schritt des Erfassens (17) eines potenziellen Problems im Verhalten des Mechanismus (1, 1') der Ausstattung des mindestens einen der Luftfahrzeuge (2, 2') der Flotte (6) darin besteht, eine Überschreitung eines vorgegebenen Schwellenwerts durch das Kompatibilitätsgewicht zu erfassen.

7. Verfahren nach einem der Ansprüche 1 bis 6,
**dadurch gekennzeichnet, dass** der Schritt des Analysierens (26) der Variationen des mindestens einen Indikators einen Teilschritt der Diskontinuitätsanalyse (28) umfasst, der darin besteht, eine Diskontinuität in einer Steigung einer Tangente einer für die Variationen des mindestens einen Indikators repräsentativen Kurve zu identifizieren.

## Claims

1. Method (11, 21) for analysing variations in at least one indicator of the behaviour of a mechanism (1, 1') equipping an aircraft (2, 2'), said at least one indicator being determined from measurements of at least one physical parameter of operation of said mechanism (1, 1') during a mission of said aircraft (2, 2'), said method (11, 21) comprising at least:
• a step of recording (12, 22) said measurements of said at least one physical operating parameter in a storage unit (3, 3');
• a first step of transmitting (13, 23) said measurements of said at least one physical operating parameter contained in said storage unit (3, 3') to a communication station (4, 4') external to said aircraft (2, 2'), said communication station (4, 4') being installed at the premises of an operator of said aircraft (2, 2');
• a second step of transmitting (14, 24) said measurements of said at least one physical operating parameter from said communication station (4, 4') to an analysis centre (5) external to said aircraft (2, 2'), said analysis centre (5) being common to a fleet (6) of aircraft (2, 2') of the same type and being installed at the premises of a manufacturer of said fleet (6) of aircraft (2, 2');
• a step of generating (15, 25) said at least one indicator based on said measurements of said at least one physical operating parameter;
• a step of analysing (16, 26) the variations of said at least one indicator;
**characterised in that** said step of analysis of (16, 26) said variations of said at least one indicator is performed from said measurements of said at least one physical operating parameter of at least two separate mechanisms (1) and (1') equipping at least two aircraft (2) and (2') of the same type belonging to at least two separate operators, said analysis centre (5) for analysing said variations of said at least one indicator from a first aircraft (2) belonging to a first operator and said variations of said at least one indicator from a second aircraft (2') belonging to a second operator, said first and second aircraft (2) and (2') being two aircraft of the same type belonging to said fleet (6) of aircraft (2, 2') of said same type, and **in that** said method comprises a step of detecting (17, 27) a potential problem in the behaviour of said mechanism (1, 1') equipping at least one of said aircraft (2, 2') of said fleet (6) and an alert step (19, 29) allowing for the alerting of said manufacturer of said fleet (6) of aircraft (2, 2') of a potential problem in the behaviour of said mechanism (1, 1') equipping at least one of said aircraft (2, 2') of said fleet (6).

2. Method according to claim 1, **characterised in that** said step of analysing (16) said variations of said at least one indicator includes a sub-step of shape analysis (18) consisting of comparing the shape of a curve representative of said variations of said at least one indicator with at least one shape of a curve pre-recorded in a database (7), said pre-recorded curve corresponding to a potential problem in the behaviour of said mechanism (1, 1').

3. Method according to claim 2, **characterised in that** said shape analysis step (18) includes a breakdown step (181) of dividing said variations of said at least one indicator into a plurality of samples of the same time dimension corresponding to a reference time dimension representative of the abscissa of said pre-registered curve.

4. Method according to claim 3, **characterised in that** said shape analysis sub-step (18) includes a comparison step (182) consisting of comparing, according to a so-called "least squares" method, each of said samples with said pre-recorded curve.

5. Method according to claim 4, **characterised in that** said comparison step (182) determines a percentage compatibility weight of each sample with respect to said pre-recorded curve.

6. Method according to claim 5, **characterised in that** said step of detecting (17) a potential problem in the behaviour of said mechanism (1, 1') equipping at least one of said aircraft (2, 2') of said fleet (6) consists of detecting an exceedance of a threshold value pre-defined by said compatibility weight.

7. Method according to any one of claims 1 to 6, **characterised in that** said step of analysing (26) said variations of said at least one indicator includes a discontinuity analysis sub-step (28) consisting of identifying a discontinuity in a slope from a tangent to a curve representative of said variations of said at least one indicator.
